(19) Europäisches Patentamt European Patent Office Office européen des brevets

(11) **EP 2 096 742 B1**

(12) **EUROPEAN PATENT SPECIFICATION**

(45) Date of publication and mention
of the grant of the patent:
**01.08.2018 Bulletin 2018/31**

(51) Int Cl.:
***H02M 1/42*** *(2007.01)*

(21) Application number: **09001897.9**

(22) Date of filing: **11.02.2009**

(54) **Power factor correction circuit for air conditioning equipment**

Leistungsfaktorkorrekturschaltung für eine Klimaanlage

Circuit de correction du facteur de puissance pour appareil de conditionnement d'air

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.02.2008 JP 2008047029**

(43) Date of publication of application:
**02.09.2009 Bulletin 2009/36**

(73) Proprietor: **Hitachi Appliances, Inc.
Minato-ku
Tokyo 105-0022 (JP)**

(72) Inventors:
 • **Notohara, Yasuo**
  **Tokyo 100-8220 (JP)**
 • **Endo, Tsunehiro**
  **Tokyo 100-8220 (JP)**
 • **Suzuki, Takahiro**
  **Tokyo 100-8220 (JP)**
 • **Okuyama, Atsushi**
  **Tochigi 329-4493 (JP)**
 • **Tamura, Kenji**
  **Tochigi 329-4493 (JP)**

(74) Representative: **Beetz & Partner mbB
Patentanwälte
Steinsdorfstraße 10
80538 München (DE)**

(56) References cited:
**EP-A- 1 919 064      JP-A- 1 114 372
JP-A- 2 261 059       JP-A- 3 230 759
JP-A- 11 041 980**

EP 2 096 742 B1

**Description**

## BACKGROUND OF THE INVENTION

The present invention relates to a power supply circuit having power factor correction and high-harmonic current suppressing capabilities and an air conditioner applying the same therein. A power supply circuit as described in the preamble portion of patent claim 1 has been known from JP-01-114372 A.

Power supply circuits are used, widely, which perform the power factor correction or harmonic current suppression of the single-phase AC power source . Among of those, a power supply circuit applying therein a boost chopper circuit, which is made up from a reactor, switching elements and diodes, is used as the power supply circuit for an inverter controller apparatus (i.e., an inverter air conditioner, etc.) necessitating no regeneration back to the power supply, because of simplicity in the circuit construction and the structure for controlling thereof.

A large number of reports are made upon a method for power factor correction or a method for harmonic current suppression, applying the boost chopper circuit therein. Among those, JP-01-114372 A describes therein a method for controlling an input current waveform power supply into a sine waveform, with using only an instantaneous value of power supply current and a proportional gain, without detecting a sine wave current instruction waveform and a phase of current supply, as a reference (hereinafter, this is called a "basic method"). This document further discloses a power supply circuit comprising a rectifier 0235-67310EP-CM/Kf circuit and a smoothing circuit, which are configured to convert AC power supply into direct current; a boost chopper circuit being made up with a switching element, which is configured to perform a switching operation upon basis of a duty ratio signal, as well as, an inductance and diodes; a controller unit which is built up with a power supply current detector circuit for detecting input current flowing from the AC power supply with using a shunt resistor and an amplifier circuit and thereby outputting an input current value, a DC voltage detector circuit for detecting the terminal voltage of the smoothing circuit and thereby outputting a DC voltage value, a processor means for processing a duty ratio signal for controlling the switching element in accordance with the input current value and the DC voltage value, and a driver circuit for amplifying the duty ratio signal and thereby driving the switching element, said controller unit is further configured to produce a second coefficient from said input current information and a first coefficient preset, so as to obtain a product between said second coefficient and said input current information, and thereby producing said duty ratio signal for regulating an operation of said switching element, at least, upon basis of this product; further comprising: a load condition producing unit, which is configured to produce load condition information indicating a condition of a load, which is connected with said smoothing circuit; and a coefficient correcting unit, which is configured to correct said first coefficient with using said load condition information. Also, JP-2796340 A describes therein the contents applying the technology mentioned above.

JP-2796340 A proposes therein, for the purpose of achieving high efficiency of the boost chopper circuit, a boost ratio stabilization control method for stopping a switching operation in the vicinity of a peak of input current (i.e., a partial switching method).

JP-01-114372 A mentioned above is described upon basis that the switching operation is conducted all over regions or areas of a power supply cycle or period (a whole-area switching method), but with this whole-area switching method, a switching loss increases and a circuit efficiency is lowered down. Then, with the boost ratio stabilization control method of JP-2796340 A achieves reduction of the switching loss with applying the partial switching method for stopping the switching operation in the vicinity of the peak of the power supply current, following the way of thinking of the basic method mentioned above (i.e., not detecting the sine wave current instruction waveform and the phase of power supply, as the reference).

Also, the invention disclosed in JP-2796340 A relates to the method of conducting partial switching therein, without detecting the sine wave current instruction waveform and the phase of power supply, as the reference, i.e., being a superior control method; but since the boost ratio thereof is set to be constant, the DC voltage comes to changes depending upon the power supply voltage and a load, which are connected with the power supply circuit.

Herein, an example of controlling the DC voltage in the power supply circuit applying the boost chopper circuit is proposed in any one of the following Patent Documents: JP-2003-289696 A, JP-2000-350442 A, JP-09-149690 A, JP-2003-189689 A and JP-2001-231262 A, and so on; however, those are of the method of using the whole-area switching method, therefore no consideration is paid upon compatibility between reduction of the switching loss and a stable control of the DC current.

## BRIEF SUMMARY OF THE INVENTION

The change of the DC voltage mentioned above is a necessary and essential phenomenon for allowing the partial switching, and it is the character (or an advantage) of the present method; however in case when the power supply voltage or the load changes largely, then also the DC voltage changes largely, there is a possibility that the operation of the system applying the present method (i.e., the power supply circuit) therein cannot be maintained. For example, when applying it into a driving apparatus for driving the compressor of an inverter air conditioner, and if the motor drive is stopped once, then the system is stopped for a certain time-period for balancing the load of the compressor, and this brings about a possibility that the capacity as the air conditioner is lowered down.

It is an object of the present invention to achieve compatibility between reduction of the switching loss in the partial switching operation (i.e., a high efficiency) and a stable control of the DC voltage (i.e., a stable control of the system applied therewith).

According to the present invention, the object mentioned above is accomplished with a power supply circuit comprising the features of patent claim 1.

Dependent claims are directed on features of preferred embodiments of the invention.

According to the present invention, it is possible to suppress fluctuation (i.e., over-voltage, lowering of voltage) even if the power supply voltage and/or the load condition are/is changed, and thereby achieving the compatibility between the high efficiency and the stable control of the system applied therein.

Also, with manufacturing a controller substrate (i.e., a hybrid IC or module) applying the present invention therein, the power supply circuit comes to be simple in the control thereof, and therefore it promotes application of the power supply circuit into products, which enables a high power factor or the harmonic current suppression.

## BRIEF DESCRIPTION OF THE DRAWINGS

Those and other objects, features and advantages of the present invention will become more readily apparent from the following detailed description when taken in conjunction with the accompanying drawings wherein:

Fig. 1 is a view for showing the entire structure of a power supply circuit, according to an embodiment of the present invention (an Embodiment 1);

Fig. 2 is a control block diagram for showing the power supply circuit, according to the embodiment of the present invention (the Embodiment 1);

Fig. 3 is a view for showing the operation of the power supply circuit, according to the embodiment of the present invention (the Embodiment 1);

Fig. 4 is a view for showing the operation of the power supply circuit, according to the embodiment of the present invention (the Embodiment 1);

Fig. 5 is a view for showing an example of ways of applying a controller circuit of the power supply circuit, according to the embodiment of the present invention (the Embodiment 1);

Fig. 6 is a control block diagram for showing the power supply circuit, according to other embodiment of the present invention (an Embodiment 2);

Fig. 7 is a view for showing the operation of the power supply circuit, according to the embodiment of the present invention (the Embodiment 2);

Fig. 8 is a view for showing the operation of the power supply circuit, according to the embodiment of the present invention (the Embodiment 2);

Fig. 9 is a view for showing the entire structure of a motor driver apparatus, according to other embodiment of the present invention (an Embodiment 3);

Fig. 10 is a control block diagram for showing the motor driver apparatus, according to the embodiment of the present invention (the Embodiment 3);

Fig. 11 is a view for showing the operation of the motor driver apparatus, according to the embodiment of the present invention (the Embodiment 3);

Fig. 12 is a view for showing the operation of the motor driver apparatus, according to the embodiment of the present invention (the Embodiment 3);

Figs. 13A and 13B are views for showing the operation of the motor driver apparatus, according to the embodiment of the present invention (the Embodiment 3);

Figs. 14A and 14B are views for showing the operation of the motor driver apparatus, according to the embodiment of the present invention (the Embodiment 3);

Fig. 15 is a view for showing an example of ways of applying a controller circuit of the motor driver apparatus, according to the embodiment of the present invention (the Embodiment 3);

Fig. 16 is an outlookview for showing an example of an inverter air conditioner, according to other embodiment of the present invention (an Embodiment 4); and

Fig. 17 is a view for showing the operation of the inverter air conditioner, according to the embodiment of the present invention (the Embodiment 4).

**DETAILED DESCRIPTION OF THE PREFERRED EMBODIMENTS**

Hereinafter, embodiments according to the present invention will be fully explained by referring to the attached drawings.

<Embodiment 1>

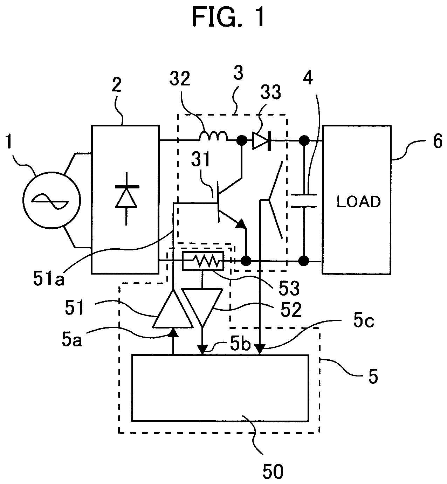

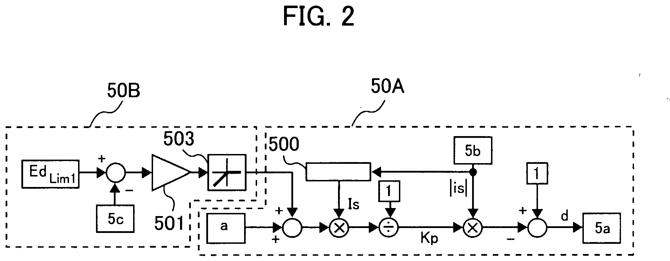

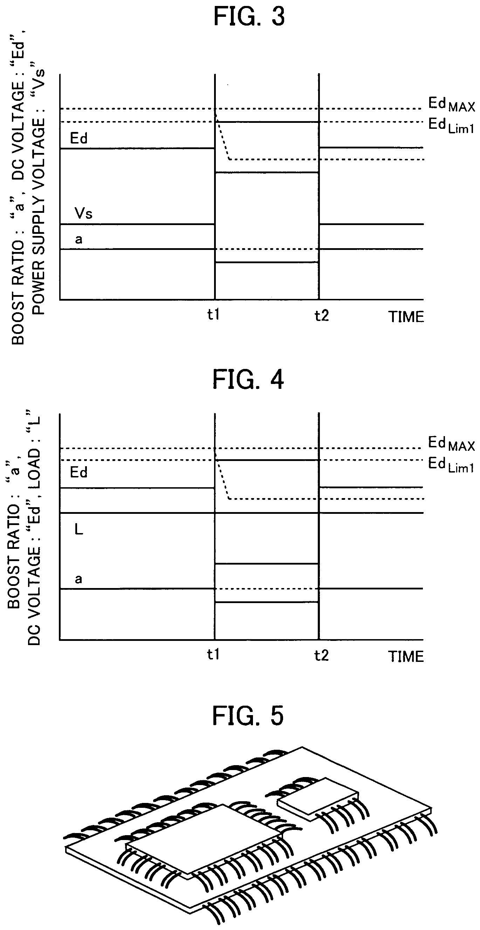

Explanation will be made on a first embodiment of the present invention, by referring to Figs. 1 to 5. Fig. 1 is a view for showing the entire structure of the power supply circuit according to the present embodiment, Fig. 2 is a control block view for showing the contents of control, Figs. 3 and 4 are views for explaining the operation of the present embodiment, and Fig. 5 is an outline view for showing an example of ways of applying the power supply circuit shown in Fig. 1 therein.
Explanation will be made on the structures and operations of a power supply circuit, by referring to Fig. 1. The present power supply circuit comprises a rectifier circuit 2, which is connected with an AC voltage source 1, a boost chopper circuit 3, a smoothing capacitor 4 and a controller circuit 5, and thereby supplying a DC power to a load, which is connected between output terminals of the smoothing capacitor 4 mentioned above.
The boost chopper circuit 3 mentioned above is made up with a reactor 32, a switching element 31 for short-circuiting the AC voltage source 1 through the reactor 32 mentioned above, and a diode 33 for supplying terminal voltage of the switching element 31 to the smoothing capacitor 4 mentioned above, i.e., it is a circuit for boosting the DC voltage with using a switching operation of the switching element 31 and an energy storage effect by means of the reactor 32 mentioned above. Herein, as the switching element 31 is applied a self-extinguishing type element, such as, an IGBT or a transistor, etc., and it is driven in accordance with a drive signal 51a from the controller circuit 5 mentioned above.
The controller circuit 5 mentioned above is built up with a power supply current detector circuit, for detecting input current flowing from the AC voltage source 1 with using a shunt resistor 53 and an amplifier circuit 52 and thereby outputting an input current value 5b, a DC voltage detector circuit, for detecting DC voltage, i.e., the terminal voltage of the smoothing capacitor 4 and thereby outputting a DC voltage value 5c, a processor means 50, for processing a duty ratio signal 5a for controlling the switching element 31 in accordance with the input current value 5b and the DC voltage value 5c mentioned above, and a driver circuit (51), for amplifying the duty ratio signal 5a and thereby driving the switching element 31 mentioned above. Herein, the details of the DC voltage detector circuit are not shown in the figure, but it may be achieved by a simple circuit construction applying a potential divider circuit therein, with use of resistors therein.
The processor means 50 applies therein a semiconductor processing element, such as, a single-chip microcomputer, representatively, for example (hereinafter, being called a "microcomputer"), wherein the input current value 5b and the DC voltage value 5c mentioned above are converted into digital values thereof with using an A/D converter, which is built in the microcomputer, to be processed therein. The duty ratio signal 5a mentioned above is outputted in the form of a PWM pulse signal with using a PWM time, which is built in the microcomputer.
Herein, explanation will be give on the digital processing with using the microcomputer, in the present embodiment, but it is also possible to obtain the similar effect with using a processing means applying therein analog operating circuits or the like, such as, transistors and/or operational amplifiers and/or comparators, for example.
Next, explanation will be made on the contents of processing conducted within the processor means 50 mentioned above, by referring to Fig. 2. In the present explanation will be mentioned about a portion where the duty ratio signal 5a mentioned above is calculated out with using the input current value 5b and the DC voltage value 5c mentioned above. A portion where the PWM pulse signal is produced from the duty ratio signal 5a calculated out with using the PWM time, since it is a function of the microcomputer, will be omitted herein.
The control block view shown in Fig. 2 is made up with a boost ratio stabilization control portion 50A relating to the conventional art and a boost ratio corrector portion 50B according to the present invention.

The boost ratio stabilization control portion 50A is made up with a basic method of controlling an input current waveform to be synchronized with a sine waveform of the power supply voltage, with using a product between an instantaneous value (an absolute value) of the input current " | is |" and a proportional gain "Kp", but without detecting a sine waveform current instruction to be referenced and/or a phase of the power supply, and a boost ratio stabilization control method of stopping the switching operation in the vicinity of a peak of the input current for reducing the switching loss.

Herein, explanation will be made about the basic method and the boost ratio stabilization control method, briefly.

If the duty ratio signal (i.e., the ratio of ON time) "d" for the switching element 31 of the boost chopper circuit 3 shown in Fig. 1 is given as shown in the following equation (1), then the input current "is" is as given by the following equation (2) . (The details of derivation will be omitted.) As is apparent from the equation (2), the input current "is" comes to be a sine waveform synchronized with the power voltage "Vs", without the reference waveform, such as the power supply waveform, etc. This is a principle of the basic method.

$$d=1-Kp\cdot |is| \quad ......(Equation\ 1)$$

Where, "1": 100% duty ratio, "Kp": current control gain, and "is": input current (instantaneous value), respectively.

$$is = \frac{\sqrt{2}\cdot Vs\cdot \sin\omega t}{Kp\cdot Ed} \quad ......(Equation\ 2)$$

Where, "Vs": an effective value of power supply voltage, "Ed": DC voltage, "ω": frequency of electrical angle, respectively.

With the basicmethod, it is possible to control the DC voltage "Ed", by determining the proportional gain "Kp" mentioned above from the DC voltage difference.

Herein, when deforming the equation (2), it comes to as follows:

$$Kp\cdot is = \frac{\sqrt{2}\cdot Vs\cdot \sin\omega t}{Ed} \quad ......(Equation\ 3)$$

This equation (3) indicates the instantaneous boost ratio.

Herein, when considering the boost ratio "a" upon basis of the effective value thereof, it comes to as follows:

$$Kp\cdot is = \frac{1}{a\cdot Is} \quad ......(Equation\ 4)$$

Where, "Is": input current (effective value).

If controlling "Kp· | is |" to be constant, then it is possible to control the DC voltage "Ed" to be "a" times large as the power supply voltage "Vs".

Based upon the method mentioned above, if giving the duty ratio signal "d" by the following equation, it comes to as follows:

$$d=1-Kp\cdot |is| \quad Kp=1/a\cdot Is ......(Equation\ 5)$$

The duty ratio signal "d" comes to 0%, when the input current "| is |" exceeds "a·Is", and then the switching operation is stopped. With this, the input current results into such a waveform that the chopper cannot operate in the vicinity of the peak of the power supply voltage (i.e., in the region where the input current exceeds "a·Is"), and then it is possible to achieve reduction of the switching loss. This is the principle of the boost ratio stabilization control.

With conducting the control as was mentioned above, it is possible to bring the input current waveform into a sine waveform synchronized with the power supply voltage, only using the instantaneous value of input current and the proportional gain, without detecting the waveform of sine waveform current instruction as the reference and the phase of power supply, and thereby enabling to stop the switching operation in the vicinity of the peak value of the input current (i.e., the partial switching operation).

Those equations mentioned above are as shown by a reference numeral 50A in Fig. 2, if showing them in the form of the block diagrams thereof. Herein, although the effective value "Is" of input current is calculated out from the input current value "b" with using a filter means 500, but it may be calculated from an averaged value or an effective value, thereby to control wit-h that value. Also, as the boost ratio "a" is used a value, that is determined in advance.

Also, in the calculation of the duty ratio signal "d" in the present block diagram, as is shown by the equation (1) and the equation (5), it is calculated out by subtracting the product between the instantaneous value of input current (absolute value) "|is|" and the proportional gain "Kp" from the maximum duty ratio "1(=100%)", but in an actual setting in the PWM timer, there is no necessity of subtracting the product between the instantaneous value of input current (absolute value) "|is|" and the proportional gain "Kp" from the maximum duty ratio "1", if setting it by considering the value thereof to be a ratio of OFF time.

The boost ratio corrector portion 50B is in such the construction that it calculates a correction value of the boost ratio "a" from the difference between a limit value "$Ed_{Limit}$", which is determined in advance, and the DC current value "5c" detected, with using a proportion/integration compensator 501, and thereby conducting the correction upon the boost ratio "a".

Herein, with the present embodiment, since it is aimed to prevent the operation from being stopped when the DC voltage exceeds an over-voltage protection value due to fluctuation of the power supply voltage and the load, the limit value "$Ed_{Lim1}$" is determined to be a value lower than the over-voltage protection value of the power supply circuit. Also, a limiter 503 is so determined that the correction operation for the boost ratio "a" is initiated (i.e. , operating in the direction of lowering the boost ratio), only when the DC voltage value exceeds the limit value "$Ed_{Lim1}$".

As was mentioned above, the present embodiment is achieved by combining the boost ratio stabilization controller portion 50A in relation with the conventional art and the boost ratio corrector portion 50B according to the present invention.

The operations and effects of the present embodiment will be mentioned, by referring to the views shown in Figs. 3 and 4 for explaining the operations thereof. However, within the present specification, for explanation and simplification of the drawings, change of each value is shown to have an ideal response. Actually, there are ill influences due to delay of the control, etc. , therefore it does not have such the characteristics as shown in the present figures. Also, such the characteristics differ from depending on the setup of the control gain of the proportion/integration compensator.

Fig. 3 is a graph for showing the operation, in case when the power supply voltage "Vs" fluctuates or changes largely at the times "t1" and "t2", with showing the time on the horizontal axis, and the boost ratio "a", the DC voltage "Ed" and the power supply voltage "Vs" on the vertical axis thereof.

Herein, the boost ratio "a" and the DC voltage "Ed" are shown, combining the operations in case of the conventional art (only the boost ratio stabilization controller portion 50A) (shown by a dotted line) and also in case of the present invention, each other.

When the power source voltage "Vs" increases abruptly at the time "t1", according to the conventional art, because the boost ratio "a" is fixed, then the DC voltage "Ed" exceeds an over-voltage setup value "$Ed_{MAX}$", then the over-voltage protection is initiated, so that the switching operation is stopped (i.e., the DC voltage decreases, abruptly).

On the contrary to this, according to the present invention, when the DC voltage exceeds the limit value "$Ed_{Lim1}$", the correction is executed on the boost ratio "a", so that the DC voltage is maintained at the limit value "$Ed_{Lim1}$". With this, it is possible to prevent the over-voltage protection from being initiated, and thereby to maintain the operation of the system. And, when the power supply voltage "Vs" turns back to a normal value at the time "t2", the correction of the boost ratio "a" also turns back to a normal value (i.e., a setup value), and thereby maintaining a normal DC voltage.

Fig. 4 is a graph for showing the operation, in case when the power supply voltage "Vs" changes largely at the times "t1" and "t2", with showing the time on the horizontal axis and the boost ratio "a", the DC voltage "Ed" and the load "L" on the vertical axis thereof.

Herein, the boost ratio "a" and the DC voltage "Ed" are also shown, as is similar to that shown in Fig. 3, combining the operation in case of the conventional art (only the boost ratio stabilization controller portion 50A) (shown by a dotted line) and that in case of the present invention (shown by a solid line) with each other.

When the load "L" decreases abruptly at the time "t1", according to the conventional art, because the boost ratio "a" is fixed, then the DC voltage "Ed" exceeds the over-voltage setup value "$Ed_{MAX}$", then the over-voltage protection is initiated, so that the switching operation is stopped (i.e., the DC voltage decreases, abruptly).

On the contrary to this, according to the present invention, as is similar to that shown in Fig. 3, when the DC voltage exceeds the limit value "$Ed_{Lim1}$", the correction is executed on the boost ratio "a", so that the DC voltage is maintained at the limit value "$Ed_{Lim1}$". With this, it is possible to prevent the over-voltage protection from being initiated, and thereby maintaining the operation of the system. And, when the load "L" turns back to an original value at the time "t2", the correction of the boost ratio "a" also turns back to the setup value, and thereby maintaining the normal DC voltage.

As was mentioned above, it is possible to suppress the increase of the DC voltage to be equal or lower than the limit value even when the power supply voltage and/or the load change (s) largely, transiently, thereby preventing the system from being stopped for the over-voltage protection. Also, under the normal condition, since it operates at the boost ratio "a", which is determined in advance, and therefore it is possible to obtain the operation at the optimal efficiency and power factor and also with harmonic current.

Herein, it is needless to say that the characteristics (or responses) mentioned above are changed depending upon the gain, which is determined for the proportion/integration compensator. In the actual system, it is necessary to determine the limit value "$Ed_{Lim1}$" and the setup gain, fitting with the characteristics that the system requires.

Next, explanation will be made on an example of ways of using the controller circuit, for operating the power supply circuit according to the present embodiment, by referring to Fig. 5.

The present example of the ways of using is a hybrid IC, applying the controller circuit 5 shown in Fig. 1 therein, and it is shown by an outlook view thereof. However, it is preferable that the shunt resistor 53 mentioned above is provided, not within the hybrid IC because of changing the parts and a countermeasure to noises, but within a space same for the power circuit parts, such as, the switching element 31, etc.

Although the input/output terminals of the controller circuit 5 shown in Fig. 1 are three (3); i.e., an input current detector terminal, a DC voltage detector terminal and a drive signal output terminal, but other than those, with provision of a boost ratio setup terminal, a DC voltage limiter value setup terminal, a load condition information detector terminal for detecting the condition of the load connected with and functions thereof, therein, it is possible to obtain a hybrid IC, further increasing the flexibility thereof.

<Embodiment 2>

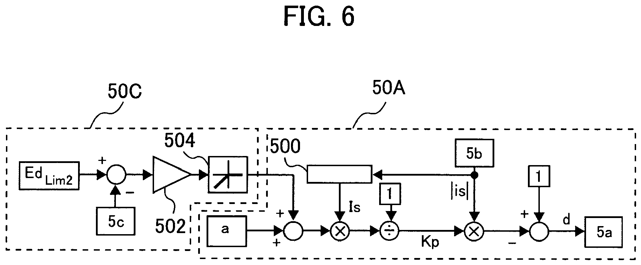

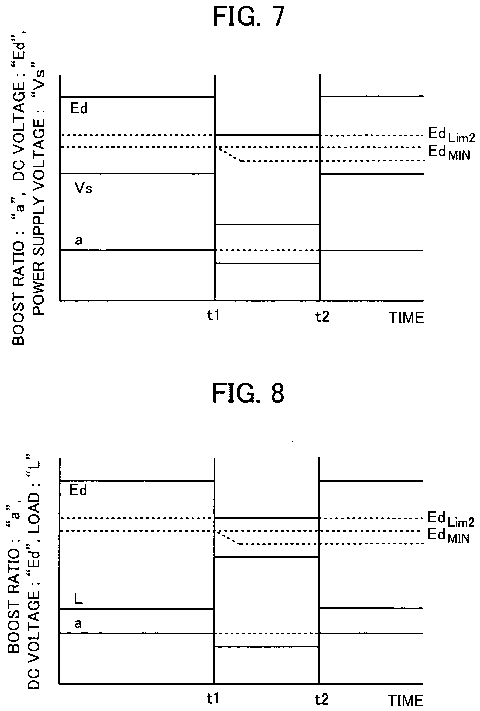

Explanation will be made on an embodiment 2 of the present invention, by referring to Figs. 6 to 8. Since the same reference numerals in the first embodiment indicate those performing the same functions, therefore the explanation thereof will be omitted herein. Fig. 6 is a control block diagram of the present embodiment, and Figs. 7 and 8 are views for explaining the operations of the present embodiment. The entire circuit structures are same to those shown in Fig. 1.

Fig. 6 is constructed with, as similar to the embodiment 1, the boost ratio stabilization controller portion 50A relating to the conventional art and a boost ratio corrector portion 50C according to the present invention. The boost ratio corrector portion 50C has the structures similar to that of the boost ratio corrector portion 50B, which was explained in the embodiment 1, and an aspect differing therefrom lies in a limit value "$Ed_{Lim2}$" and a limiter 504. Further, a proportion/integration compensator 502 perform the operation same to that of the proportion/integration compensator 501 shown in Fig. 2.

Though the over-voltage of the DC voltage is suppressed in the operation thereof, within the first embodiment, but the present embodiment has the structures for preventing the DC voltage from lowering or reduction thereof. For this reason, the limiter 504 is so setup that it corrects the boost ratio "a" only when the DC voltage value comes down lower than the limit value "$Ed_{Lim2}$" (i.e., operating only into a direction of increasing the boost ratio).

The view for explaining the operation shown in Fig. 7, similar to the first embodiment, showing the time on the horizontal axis, and the boost ratio "a", the DC voltage "Ed" and the power supply voltage "Vs" on the vertical axis thereof, shows the operation when the power supply voltage "Vs" fluctuates largely at the times "t1" and "t2". Herein, the boost ratio "a" and the DC voltage "Ed" are shown, combining the operations in case of the conventional art (only the boost ratio stabilization controller portion 50A) (shown by a dotted line) and also in case of the present invention, each other.

When the power source voltage "Vs" increases abruptly at the time "t1", according to the conventional art, because the boost ratio "a" is fixed, then the DC voltage "Ed" also lowers down abruptly, similar to the power supply voltage. Herein, when a low voltage protection setup value "$Ed_{MIN}$", as the power supply circuit system, the low voltage protection is initiated to stop the power supply circuit system, and therefore it is impossible to maintain the operation of the system.

On the contrary to this, according to the present invention, correction is made upon the boost ratio "a" when the DC voltage comes to be equal or greater than " $Ed_{Lim2}$" , the DC voltage is maintained at "$Ed_{Lim2}$". With this, it is possible to prevent the low voltage protection from being initiated, and thereby enabling to maintain the operation of the system. Also, if the power supply voltage "Vs" turns back to the normal value at "t2", then also the correction of the boost ratio "a" turns back to the normal value (i.e., the setup value), and thereby maintaining the normal DC voltage.

Fig. 8 is a graph for showing the operation, in case when the power supply voltage "Vs" changes largely at the times "t1" and "t2", with showing the time on the horizontal axis and the boost ratio "a", the DC voltage "Ed" and the load "L" on the vertical axis thereof.

When the load "L" decreases abruptly at the time "t1", according to the conventional art, because the boost ratio "a" is fixed, then the DC voltage "Ed" comes to be equal or lower than the low voltage protection setup value "$Ed_{MIN}$", then the low voltage protection is initiated, so that the switching operation is stopped (i.e., the DC voltage further decreases, abruptly).

On the contrary to this, according to the present invention, as is similar to that shown in Fig. 7, when the DC voltage is equal or lower than the limit value "Ed$_{Lim2}$", the correction is executed on the boost ratio "a", so that the DC voltage is maintained at the limit value "Ed$_{Lim2}$". With this, it is possible to prevent the low voltage protection from being initiated, and thereby maintaining the operation of the system. And, when the load "L" turns back to an original value at the time "t2", the correction of the boost ratio "a" also turns back to the setup value, and thereby maintaining the normal DC voltage.

As was mentioned above, it is possible to suppress the decrease of the DC voltage at the limit value even when the power supply voltage and/or the load change(s) largely, transiently, thereby preventing the system from being stopped for the low voltage protection. Also, under the normal condition, since it operates at the boost ratio "a", which is determined in advance, and therefore it is possible to obtain the operation at the optimal efficiency and power factor and also with harmonic current.

Herein, in the first and second embodiments, the explanation was given on the operation, by taking the transitional fluctuation as an example; however, it is possible to deal with such the fluctuation of the power supply and the load, with the similar structures, not only for the transitional one, but also for a slow fluctuation thereof.

<Embodiment 3>

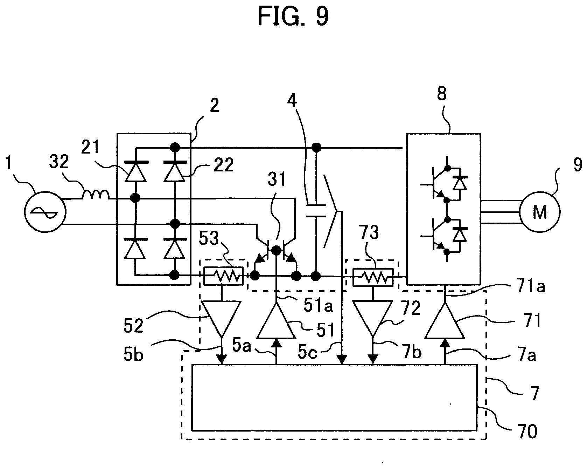

Explanation will be given on a third embodiment according to the present invention, by referring to Figs. 9 to 15. The same reference numerals indicate the same operations in the first embodiment and the second embodiment, and therefore the explanations thereof will be omitted herein.

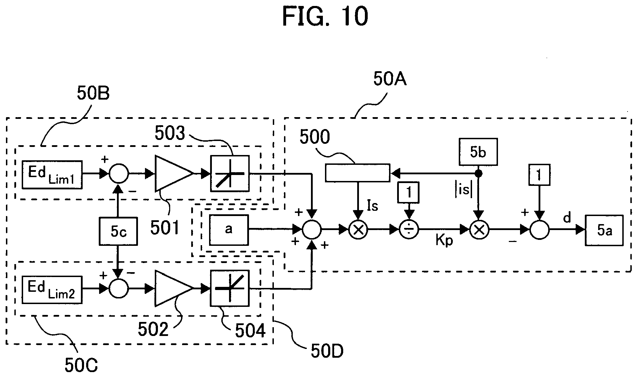

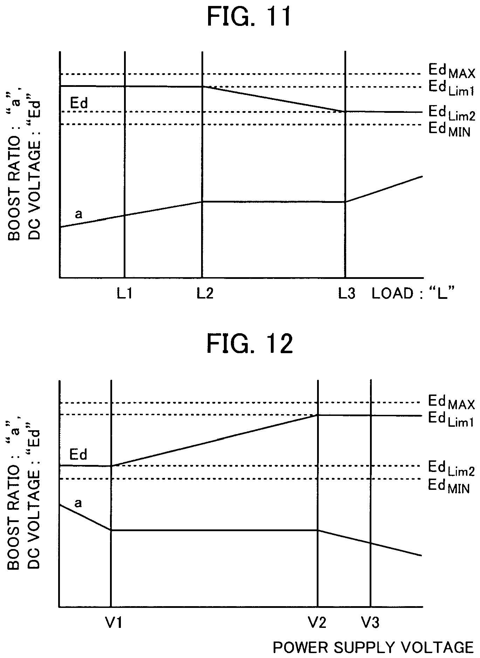

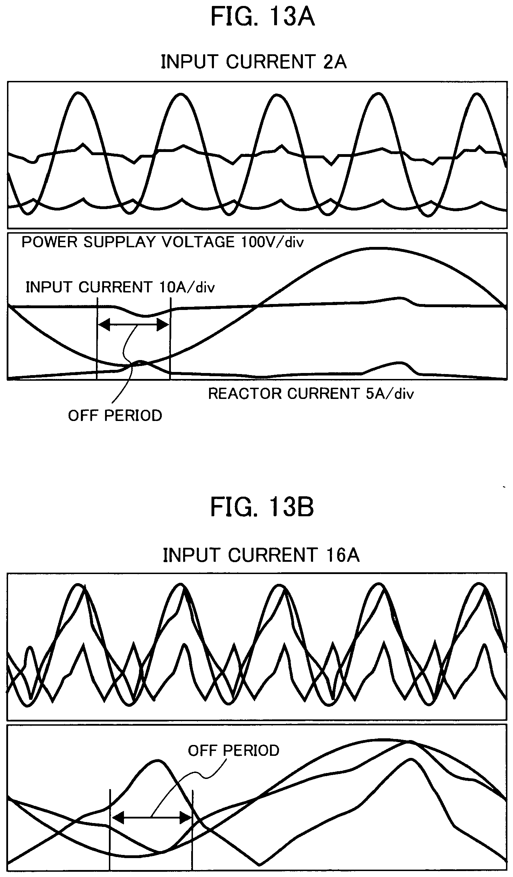

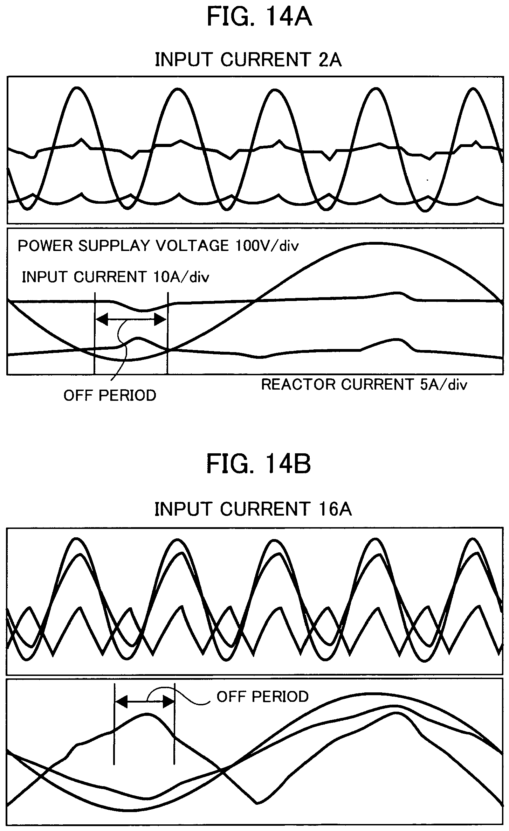

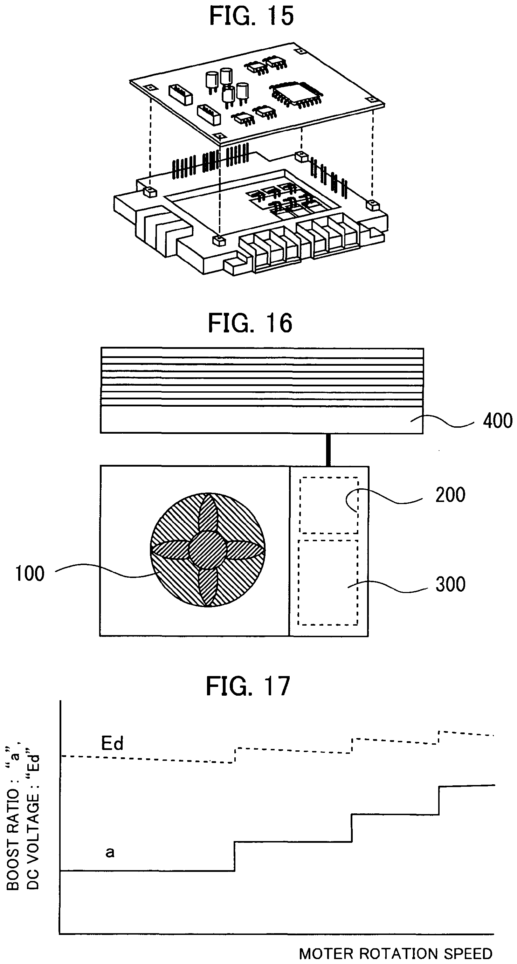

Fig. 9 is a view for showing the entire structures of a motor driver apparatus, according to the present invention, Fig. 10 is a control block diagram for showing the contents of control, Figs. 11 and 12 are views for explaining the operation of the present embodiment, Figs. 13A and 13B and 14A and 14B are views for showing the waveforms of input currents flowing into the power supply circuit, and Fig. 15 is an outlook view of a module, as an example of ways of using of the present embodiment.

In Fig. 9, as the load of the power supply circuit according to the present invention is connected a motor driver circuit, being made up with a motor 9 and an inverter circuit 8, and the controller circuit of the power supply circuit according to the present invention and the controller circuit of the inverter circuit 8 mentioned above are unified or built up as an unit, in the structures thereof. In other words, the controller circuit 7 shown in Fig. 9 uses a microcomputer therein, so that the power supply circuit and the inverter circuit are controlled by one (1) set of the microcomputer, in the structures thereof.

Explanation will be made only on parts differing from those shown in the first and second embodiments. The inverter circuit 8 is an inverter circuit, being made up with an IGBT and diodes, and the motor 9 is a permanent magnet synchronous motor.

Also, though the structures of the boost chopper circuit differ from those of the first and second embodiments, but with such the present circuit structures, it is possible to obtain the operation similar to those of the first and second embodiments. Herein, diodes 21 and 22 in the rectifier circuit 2 perform the operations similar to that of the diode 33 of the boost chopper circuit 3 of the first and second embodiments, other than the rectifying operation of the power supply. In other words, the above diodes 21 and 22 perform the two (2) operations mentioned above, and with adopting this circuit structure, there can be obtain an effect of reducing the loss for one (1) piece of diode.

The controller circuit 7 controls the power supply circuit of the present invention and the inverter circuit with using the microcomputer, as was mentioned above, and within the microcomputer (i.e., a computing means 70) are conducted a computation for controlling the power supply circuit, which was explained in the first and second embodiment, and also a computation for controlling the inverter circuit.

With the structures of the controller circuit within the power supply circuit portion shown in Fig. 10, since they are obtained by combining the contents of the first and second embodiments (i.e., obtaining 50D by combining 50B and 50C), then the explanation thereof will be omitted. Herein, explanation will be given on the structure of the controller circuit of the inverter circuit portion, briefly.

Within motor control according to the present embodiment, since there is executed a vector control without a motor current sensor and a position sensor (i.e., motor current sensor-less and position sensor-less control), then what is detected from the inverter circuit is only upon the DC current flowing through the shunt resistor 73. In more details, as is shown in Fig. 9, the voltage generating across the shunt resistor 73 mentioned above is amplified through an amplifier 72, and it is taken as a DC current detection value 7b with using an A/D converter of the microcomputer. Also, a PMW signal 7a is given to the inverter circuit as a drive signal 71a through a drive circuit 71.

Herein, within the computing means 70, though not shown in the figure, there are built in the controller means of the power supply circuit and a motor current sensor-less and position sensor-less controller means, which are explained in the first and second embodiments, wherein they can exchange information about an internal value thereof with each other. With such the structures, the power supply circuit executes the operation similar to that in the first and second embodiments.

Next, explanation will be made on the operation of the present embodiment by referring to Figs. 11 and 12. Though the explanation was given upon the motive (i.e., the transitional) operation, within the first and second embodiment, but in the present embodiment, explanation will be given on a static operation thereof.

Fig. 11 shows the boost ratio "a" and the DC voltage "Ed" with respect to the load. The present embodiment, as is shown in Fig. 10, has such the structure of combining the controller structures explained in the first and second embodiments together, that the DC voltage changes between the limit value "$Ed_{Lim1}$" and the limit value "$Ed_{Lim2}$" in the operation thereof.

For example, when the load comes to a light load, being equal or less than the load "L1", then the boost ratio corrector portion 50B operates, so that the boost ratio "a" is corrected (i.e., decreased) and the DC voltage is controlled at the limit value "$Ed_{Lim1}$". On the contrary to that, when the load comes to a high load, being equal or higher than the load "L2", then the boost ratio corrector portion 50C operates, so that the boost ratio "a" is corrected (i.e., increased) and the DC voltage is controlled at the limit value "$Ed_{Lim2}$".

Fig. 12 shows the boost ratio "a" and the DC voltage "Ed" with respect to the power supply voltage, wherein since moving of the boost ratio "a" and the DC voltage "Ed" is similar to that shown in Fig. 11, then the explanation thereof will be omitted.

Herein, Figs. 13A and 13B and Figs. 14A and 14B show the waveforms, as results of experiments, of the input current (or a reactor current), flowing into the power supply circuit, and the power supply voltage, when changing the load while keeping the power supply voltage to be constant.

Figs. 13A and 13B show the results of experiments in the case of applying the conventional art (i.e. , only the boost ratio stabilization controller portion 50A), and Figs. 14A and 14B in the case of applying the present invention. Both Figs. 13A and 14A show the results when the input current is "2A", and Figs. 13B and 14B show the results when the input current is "16A", respectively. Also, in addition thereto is shown a switching OFF period under the partial switching operation.

From those figures, with the conventional art, since the boost ratio "a" is not adjusted (or changed) even if the load changes, the switching OFF period also has an almost same time-interval, and as the load increases, the input current also has a waveform having a large distortion ratio. Herein, although not shown in the figure, with the current waveform shown in Fig. 13B, the harmonic current also increases.

On the contrary to this, the input current with applying the present invention therein, has the waveform, as shown in Figs. 14A and 14B, changing the switching OFF period (reduced by about 15%) and less in the distortion ratio. Though the value of the harmonic current is not shown in the figure, but with the waveform shown in Fig. 14B, the harmonic current value is also decreased.

Fig. 15 is an outlook view of a module of unifying the power supply circuit, the inverter circuit and the controller circuit, as an example of the ways of applying the present embodiment therein.

The present module is a one-body module of disposing power system semiconductors, such as, the IGBT and the diodes, in a lower portion, mounting them in the form of bear chips, while disposing the controller circuit on a circuit board within an upper portion thereof. Building up them in the form of the module enables to apply the present invention, easily, and to construct a cheap system from a viewpoint of costs.

Herein, the present embodiment was explained as the inverter circuit applying the vector control therein, but the similar effect can be obtained with using a 120-degree control-type inverter, which is widely used conventionally.

Also, within the present embodiment, though the conditions (changes) of the power supply voltage and the load are detected through detection of the DC voltage, however as such the load condition information may be a value, which varies depending on the condition of the load, such as, a motor rotation speed, the input current, the DC current, the DC voltage, a DC power, a pulsating width of DC voltage, an input electric power, a torque, a peak value ratio of the inverter circuit, or the inverter duty ratio, etc., for example. Or, two (2) pieces or more of the values may be used in common.

As was mentioned above, with application of the present invention, it is possible to build up a system, for enabling to continue the operation if the power supply voltage and/or load fluctuate(s), and thereby enabling to operate at an optimal efficiency under the normal condition. Also, optimization of the boost ratio and the limit values enables the operation at high efficiency, and at the same time, automatically enabling to suppress the harmonic current.

<Embodiment 4>

Explanation will be made on a fourth embodiment of the present invention, by referring to Figs. 16 and 17. The same reference numerals in the embodiments (1 to 3) mentioned above indicate the same operations, and therefore the explanations thereof will be omitted.

Fig. 16 is an outlook view of an inverter air conditioner, in case when applying the motor driver apparatus, which was explained in the third embodiment, into a motor driver apparatus for use in driving of a compressor of the inverter air conditioner, and Fig. 17 is a view for explaining the operation when the boost ratio "a" changes depending on the load (i.e. , the rotation speed) of the inverter air conditioner.

With the embodiments mentioned above, the explanation was given on such contents that the boost ratio "a" is corrected when the DC voltage comes to be equal or higher than, or to be equal or lower than the limit value; however for achieving the compatibility between further increase of the efficiency and the high output, there is a necessity for changing the setup value of the boost ratio "a", by itself, depending on the load (i.e., the rotation speed) of the inverter.

As an example, Fig. 16 shows an outlook view of the inverter air conditioner of separate-type, being constructed with an outdoor or exterior machine 600 and an indoor or interior machine 400. Within the exterior machine 600 are provided a compressor 300 unified with the motor and/or an exterior fan 100, and a compressor 300 and/or a motor driver apparatus 200 for driving the exterior fan 100.

In the present embodiment, the explanation will be given on a method for changing the boost ratio "a" depending on the rotation speed of the motor for use of driving the compressor of the inverter air conditioner, by referring to Fig. 17.

Basically, although it is enough that the boost ratio "a" may be fixed, as was mentioned in the previous embodiment, however by taking further increase of efficiency and/or stability of the motor control and high output into the consideration thereof, the boost ratio "a" is changed depending on the load condition.

In Fig. 17 is shown a motor rotation speed on the horizontal axis while the boost ratio "a" and the DC voltage "Ed" on the vertical axis thereof. As is shown in Fig. 17, the operation is made with lowering the boost ratio "a" within a region where the rotation speed of the motor is low, in other words, under the condition that the load is light. In this case, since it is possible to suppress the DC voltage down to be low, therefore the switching loss or the like of the power supply circuit is decreased, and further it is also possible to reduce the losses of the inverter circuit and the motor, thereby enabling the operation at the high efficiency.

However, in this case, the harmonic component increases on the waveform of the input current, and then the power factor of the power supply also goes down. For this reason, it is necessary to take the above into the consideration when making the setup of the boost ratio "a".

When the rotation speed (i.e., the load) of the motor increases further, then there may be a possibility that the harmonic components of the input current go out beyond a standard value, or the power factor is lowered, largely. Also, the DC voltage "Ed" goes down. Then, with increasing the boost ratio "a", as the motor rotation speed (load) increases, it is possible to obtain the operation at high efficiency, always, depending on the rotation speed (i.e., the load) of the motor.

Within the present embodiment, although the boost ratio "a" is changed in a step-wise manner depending on the motor rotation speed, but in an actual operation, there is a necessity for providing a hysteresis therein (illustration thereof is omitted) . Also, the boost ratio "a" may be changed linearly, for may be changed with applying a certain function. Further, it is also possible to control the rotation speed with using the boost ratio "a". In other words, it is possible to control the rotation speed of the motor with variable DC voltage by chaining the boost ratio "a".

Herein, as the load condition information may be a value changing depending on the condition of the load, such as, the motor rotation speed, the input current, the DC current, the DC voltage, the DC power, the pulsating width of DC voltage, the input electric power, the torque, the peak value ratio of the inverter circuit, or the inverter duty ratio, etc., for example. Or, two (2) pieces or more of the values may be used in common.

As was mentioned above, with changing the boost ratio "a", which is determined depending on the load of the inverter air conditioner, it is possible to obtain compatibility between further improvement of efficiency and the high output, and thereby enabling to prevent the system from being stopped when change occurs in the power supply or the load (i.e., beyond expectation).

While we have shown and described several embodiments in accordance with our invention, it should be understood that disclosed embodiments are susceptible of changes and modifications without departing from the scope of the invention, as defined by the appended claims.

### Claims

**1.** A power supply circuit, comprising:

a rectifier circuit (2) and a smoothing circuit (4), which are configured to convert AC power supply (1) into direct current;

a boost chopper circuit (3) being made up with a switching element (31), which is configured to perform a switching operation upon basis of a duty ratio signal (5a), as well as, an inductance (32) and diodes (33; 21, 22);

a controller unit (5) which is built up with a power supply current detector circuit for detecting input current flowing from the AC power supply (1) with using a shunt resistor (53) and an amplifier circuit (52) and thereby outputting an input current value (5b), a DC voltage detector circuit for detecting the terminal voltage of the smoothing circuit (4) and thereby outputting a DC voltage value (5c), a processor means (50) for processing a duty ratio signal (5a) for controlling the switching element (31) in accordance with the input current value (5b) and the DC voltage value (5c), and a driver circuit for amplifying the duty ratio signal (5a) and thereby driving the switching element (31), said controller unit (5) is further configured to produce a second coefficient from said input current value (5b) and a first coefficient preset, so as to obtain a product between said second coefficient and said input current value (5b), and thereby producing said duty ratio signal (5a) for regulating an operation of said switching element (31), at least, upon basis of this product; further comprising:

a load condition producing unit, which is configured to produce load condition information indicating a condition of a load (6), which is connected with said smoothing circuit (4); and 0235-67.310EP-CM/Kf
a coefficient correcting unit, which is configured to correct said first coefficient with using said load condition information,
**characterized in that** said coefficient correcting unit is further configured to correct said first coefficient as follows:

a first configuration which is configured not to correct said first coefficient,
a second configuration to correct said first coefficient with using said DC voltage,
wherein said configuration is selected in accordance with said DC voltage;
and **in that**, when said DC voltage value is higher than a predetermined value or lower than another predetermined value, said second configuration is selected and said first coefficient is corrected.

2. A power supply circuit according to claim 1, wherein said predetermined value is maintained at least at two values, i.e., a maximum and minimum value, in the condition for maintaining said DC voltage at a predetermined value.

3. A power supply circuit according to claim 1, wherein said predetermined value is a maximum and minimum value of the DC voltage.

4. A power supply circuit according to claim 1, wherein said predetermined value are two values, i.e. a value being lower than an over-voltage value of said power supply circuit system and a value being higher than a minimum voltage of said power supply circuit system.

5. A module, comprising:

a power supply circuit, according to claims 1 to 4;
an inverter circuit (8), which is configured to drive a motor (9) as the load of said power supply circuit; and
a controller circuit (5), which is configured to control said power supply circuit and said inverter circuit (8), wherein said power supply circuit, said inverter circuit (8) and said controller circuit (5) are mounted on same circuit board.

6. A motor driver apparatus (200), comprising:

a power supply circuit, according to claims 1 to 4;
a motor (9); and
an inverter circuit (8), which is configured to drive said motor (9), wherein said motor (9) and said inverter circuit (8) are connected with said power supply circuit as a load of said power supply circuit.

7. An air conditioner, comprising:
a motor driver circuit, according to claim 6, or a module according to claim 5, wherein said motor driver circuit is applied for driving a motor (9) for use of driving a compressor (300) of said air conditioner, wherein, when a power supply voltage is lowered or a load of an air conditioner is increased, an air conditioner is operated continually by controlling the DC voltage not to be lower than a predetermined value.

8. An air conditioner, comprising:

a motor driver circuit according to claim 6, or a module according to claim 5, wherein said motor driver circuit is applied for driving a motor (9) for use of driving a compressor (300) of said air conditioner,
wherein, when said power supply voltage is increased or a load of an air conditioner is lowered, an air conditioner is operated continually by controlling DC voltage not to be higher than a predetermined value.

**Patentansprüche**

1. Leistungsversorgungsschaltung, die umfasst:

   eine Gleichrichterschaltung (2) und eine Glättungsschaltung (4), die so konfiguriert sind, dass sie eine Wechselstromleistungsversorgung (1) in Gleichstrom umwandeln;
   eine Spannungserhöhungs-Zerhackerschaltung (3), die mit einem Schaltelement (31), das dafür konfiguriert ist, auf der Grundlage eines Tastgradsignals (5a) eine Schaltopration auszuführen, sowie mit einem induktiven Bauelement (32) und mit Dioden (33; 21, 22) gebildet ist;
   eine Controllereinheit (5), die mit einer Leistungsversorgungs-Stromdetektorschaltung zum Detektieren eines von der Wechselstromversorgung (1) fließenden Eingangsstroms unter Verwendung eines Nebenschlusswiderstands (53) und einer Verstärkerschaltung (52) und dadurch zum Ausgeben eines Eingangsstromwerts (5e), mit einer Gleichspannungsdetektorschaltung zum Detektieren der Klemmenspannung der Glättungsschaltung (4) und dadurch zum Ausgeben eines Gleichspannungswerts (5c), mit einem Prozessormittel (50) zum Verarbeiten eines Tastgradsignals (5a) zum Steuern des Schaltelements (31) in Übereinstimmung mit dem Eingangsstromwert (5b) und mit dem Gleichspannungswert (5c), und mit einer Treiberschaltung zum Verstärken des Tastgradsignals (5a) und dadurch zum Ansteuern des Schaltelements (31) aufgebaut ist, wobei die Controllereinheit (5) ferner zum Erzeugen eines zweiten Koeffizienten aus dem Eingangsstromwert (5b) und einer Voreinstellung des ersten Koeffizienten, um ein Produkt zwischen dem zweiten Koeffizienten und dem Eingangsstromwert (5b) zu erhalten, und dadurch zum Erzeugen des Tastgradsignals (5a) zum Regulieren eines Betriebs des Schaltelements (31) wenigstens auf der Grundlage dieses Produkts konfiguriert ist; wobei die Leistungsversorgungsschaltung ferner umfasst:

   eine Lastzustands-Erzeugungseinheit, die dafür konfiguriert ist, Lastzustandsinformationen zu erzeugen, die einen Zustand einer Last (6), die mit der Glättungsschaltung (4) verbunden ist, angeben; und
   eine Koeffizientenkorrektureinheit, die dafür konfiguriert ist, den ersten Koeffizienten unter Verwendung der Lastzustandsinformationen zu korrigieren,
   **dadurch gekennzeichnet, dass** die Koeffizientenkorrektureinheit ferner wie folgt zum Korrigieren des ersten Koeffizienten konfiguriert ist:

   eine erste Konfiguration, die dafür konfiguriert ist, den ersten Koeffizienten nicht zu korrigieren,
   eine zweite Konfiguration zum Korrigieren des ersten Koeffizienten unter Verwendung der Gleichspannung,
   wobei die Konfiguration in Übereinstimmung mit der Gleichspannung ausgewählt wird;
   und dadurch, dass die zweite Konfiguration ausgewählt wird und der erste Koeffizient korrigiert wird, wenn der Gleichspannungswert höher als ein vorgegebener Wert oder niedriger als ein anderer vorgegebener Wert ist.

2. Leistungsversorgungsschaltung nach Anspruch 1, wobei der vorgegebene Wert in dem Zustand, um die Gleichspannung auf einem vorgegebenen Wert zu halten, wenigstens auf zwei Werten, d. h. einem Maximal- und einem Minimalwert, gehalten wird.

3. Leistungsversorgungsschaltung nach Anspruch 1, wobei der vorgegebene Wert ein Maximal- und ein Minimalwert der Gleichspannung ist.

4. Leistungsversorgungsschaltung nach Anspruch 1, wobei der vorgegebene Wert zwei Werte, d. h. ein Wert, der niedriger als ein Überspannungswert des Leistungsversorgungsschaltungssystems ist, und ein Wert, der höher als eine Minimalspannung des Leistungsversorgungsschaltungssystems ist, sind.

5. Modul, das umfasst:

   eine Leistungsversorgungsschaltung nach den Ansprüchen 1 bis 4;
   eine Wechselrichterschaltung (8), die dafür konfiguriert ist, einen Motor (9) als die Last der Leistungsversorgungsschaltung anzusteuern; und
   eine Controllerschaltung (5), die dafür konfiguriert ist, die Leistungsversorgungsschaltung und die Wechselrichterschaltung (8) zu steuern, wobei die Leistungsversorgungsschaltung, die Wechselrichterschaltung (8) und die Controllerschaltung (5) auf derselben Leiterplatte montiert sind.

**6.** Motortreibervorrichtung (200), die umfasst:

eine Leistungsversorgungsschaltung nach den Ansprüchen 1 bis 4;
einen Motor (9); und
eine Wechselrichterschaltung (8), die dafür konfiguriert ist, den Motor (9) anzusteuern, wobei der Motor (9) und die Wechselrichterschaltung (8) als eine Last der Leistungsversorgungsschaltung mit der Leistungsversorgungsschaltung verbunden sind.

**7.** Klimaanlage, die umfasst:

eine Motortreiberschaltung nach Anspruch 6 oder ein Modul nach Anspruch 5, wobei die Motortreiberschaltung zum Ansteuern eines Motors (9) zur Verwendung beim Antreiben eines Kompressors (300) der Klimaanlage angewendet wird,
wobei eine Klimaanlage ununterbrochen durch Steuern der Gleichspannung in der Weise, dass sie nicht niedriger als ein vorgegebener Wert ist, betrieben wird, wenn eine Leistungsversorgungsspannung verringert wird oder wenn eine Last einer Klimaanlage erhöht wird.

**8.** Klimaanlage, die umfasst:

eine Motortreiberschaltung nach Anspruch 6 oder ein Modul nach Anspruch 5, wobei die Motortreiberschaltung zum Ansteuern eines Motors (9) zur Verwendung beim Antreiben eines Kompressors (300) der Klimaanlage angewendet wird,
wobei eine Klimaanlage ununterbrochen durch Steuern der Gleichspannung in der Weise, dass sie nicht höher als ein vorgegebener Wert ist, betrieben wird, wenn die Leistungsversorgungsspannung erhöht wird oder wenn eine Last der Klimaanlage verringert wird.

**Revendications**

**1.** Circuit d'alimentation électrique, comprenant :

un circuit redresseur (2) et un circuit de lissage (4), qui sont configurés pour convertir une alimentation électrique en CA (1) en courant continu ;
un circuit élévateur à interruption périodique (3) étant doté d'un élément de commutation (31), qui est configuré pour exécuter une opération de commutation sur la base d'un signal de facteur de marche (5a), ainsi que d'une inductance (32) et de diodes (33 ; 21, 22) ;
une unité de contrôleur (5) qui est dotée d'un circuit détecteur de courant d'alimentation électrique pour détecter un courant d'entrée provenant de l'alimentation électrique en CA (1) avec l'utilisation d'une résistance shunt (53) et un circuit amplificateur (52) et délivrant ainsi en sortie une valeur (5b) de courant d'entrée, un circuit détecteur de tension de CC pour détecter la tension aux bornes du circuit de lissage (4) et délivrant ainsi en sortie une valeur (5c) de tension de CC, un moyen de processeur (50) pour traiter un signal de facteur de marche (5a) pour commander l'élément de commutation (31) en fonction de la valeur (5b) de courant d'entrée et de la valeur (5c) de tension de CC, et un circuit d'attaque pour amplifier le signal de facteur de marche (5a) et ainsi piloter l'élément de commutation (31), ladite unité de contrôleur (5) est en outre configurée pour produire un deuxième coefficient à partir de ladite valeur (5b) de courant d'entrée et d'un premier coefficient prédéfini, de façon à obtenir un produit entre ledit deuxième coefficient et ladite valeur (5b) de courant d'entrée, et produisant ainsi ledit signal de facteur de marche (5a) pour réguler un fonctionnement dudit élément de commutation (31), au moins, sur la base de ce produit ; comprenant en outre :
une unité de production de condition de charge, qui est configurée pour produire une information de condition de charge indiquant une condition d'une charge (6), qui est connectée avec ledit circuit de lissage (4) ; et
une unité de correction de coefficient, qui est configurée pour corriger ledit premier coefficient avec l'utilisation de ladite information de condition de charge,
**caractérisé en ce que** ladite unité de correction de coefficient est en outre configurée pour corriger ledit premier coefficient comme suit :

une première configuration qui est configurée pour ne pas corriger ledit premier coefficient,
une deuxième configuration pour corriger ledit premier coefficient avec l'utilisation de ladite tension de CC,
dans lequel ladite configuration est sélectionnée en fonction de ladite tension de CC ;

et **en ce que**, lorsque ladite valeur de tension de CC est supérieure à une valeur prédéterminée ou inférieure à une autre valeur prédéterminée, ladite deuxième configuration est sélectionnée et ledit premier coefficient est corrigé.

2. Circuit d'alimentation électrique selon la revendication 1, dans lequel ladite valeur prédéterminée est maintenue au moins à deux valeurs, à savoir, une valeur maximum et une valeur minimum, dans la condition pour maintenir ladite tension de CC à une valeur prédéterminée.

3. Circuit d'alimentation électrique selon la revendication 1, dans lequel ladite valeur prédéterminée est une valeur maximum et une valeur minimum de la tension de CC.

4. Circuit d'alimentation électrique selon la revendication 1, dans lequel ladite valeur prédéterminée est deux valeurs, à savoir, une valeur étant inférieure à une valeur de surtension dudit système de circuit d'alimentation électrique et une valeur étant supérieure à une tension minimum dudit système de circuit d'alimentation électrique.

5. Module, comprenant :

un circuit d'alimentation électrique selon les revendications 1 à 4 ;
un circuit inverseur (8), qui est configuré pour piloter un moteur (9) comme la charge dudit circuit d'alimentation électrique ; et
un circuit de contrôleur (5), qui est configuré pour commander ledit circuit d'alimentation électrique et ledit circuit inverseur (8), dans lequel ledit circuit d'alimentation électrique, ledit circuit inverseur (8) et ledit circuit de contrôleur (5) sont montés sur la même carte de circuits.

6. Appareil (200) de pilotage de moteur, comprenant :

un circuit d'alimentation électrique selon les revendications 1 à 4 ;
un moteur (9) ; et
un circuit inverseur (8), qui est configuré pour piloter ledit moteur (9), dans lequel ledit moteur (9) et ledit circuit inverseur (8) sont connectés avec ledit circuit d'alimentation électrique comme une charge dudit circuit d'alimentation électrique.

7. Climatiseur, comprenant :
un circuit de pilotage de moteur selon la revendication 6, ou un module selon la revendication 5, dans lequel ledit circuit de pilotage de moteur est appliqué pour piloter un moteur (9) pour une utilisation de pilotage d'un compresseur (300) dudit climatiseur, dans lequel, lorsqu'une tension d'alimentation électrique est abaissée ou qu'une charge d'un climatiseur est augmentée, un climatiseur est fait fonctionner en continu en commandant la tension de CC de façon à ce qu'elle ne soit pas inférieure à une valeur prédéterminée.

8. Climatiseur, comprenant :

un circuit de pilotage de moteur selon la revendication 6, ou un module selon la revendication 5, dans lequel ledit circuit de pilotage de moteur est appliqué pour piloter un moteur (9) pour une utilisation de pilotage d'un compresseur (300) dudit climatiseur,
dans lequel, lorsque ladite tension d'alimentation électrique est augmentée ou qu'une charge d'un climatiseur est diminuée, un climatiseur est fait fonctionner en continu en commandant la tension de CC de façon à ce qu'elle ne soit pas supérieure à une valeur prédéterminée.

# FIG. 1

# FIG. 2

## FIG. 3

## FIG. 4

## FIG. 5

# FIG. 6

# FIG. 7

# FIG. 8

# FIG. 9

# FIG. 10

## FIG. 11

BOOST RATIO : "a",
DC VOLTAGE : "Ed"

Ed$_{MAX}$
Ed$_{Lim1}$

Ed

Ed$_{Lim2}$
Ed$_{MIN}$

a

L1    L2    L3    LOAD : "L"

## FIG. 12

BOOST RATIO : "a",
DC VOLTAGE : "Ed"

Ed$_{MAX}$
Ed$_{Lim1}$

Ed

Ed$_{Lim2}$
Ed$_{MIN}$

a

V1    V2    V3

POWER SUPPLY VOLTAGE

# FIG. 13A

## INPUT CURRENT 2A

POWER SUPPLY VOLTAGE 100V/div

INPUT CURRENT 10A/div

REACTOR CURRENT 5A/div

OFF PERIOD

# FIG. 13B

## INPUT CURRENT 16A

OFF PERIOD

# FIG. 14A

### INPUT CURRENT 2A

POWER SUPPLAY VOLTAGE 100V/div

INPUT CURRENT 10A/div

OFF PERIOD

REACTOR CURRENT 5A/div

# FIG. 14B

### INPUT CURRENT 16A

OFF PERIOD

## FIG. 15

## FIG. 16

## FIG. 17

MOTER ROTATION SPEED

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1114372 A
- JP 2796340 A
- JP 2003289696 A
- JP 2000350442 A
- JP 9149690 A
- JP 2003189689 A
- JP 2001231262 A